(19) Europäisches Patentamt / European Patent Office / Office européen des brevets

(11) **EP 4 624 789 A1**

(12) **EUROPEAN PATENT APPLICATION**
published in accordance with Art. 153(4) EPC

(43) Date of publication:
01.10.2025 Bulletin 2025/40

(21) Application number: 23895088.5

(22) Date of filing: 24.11.2023

(51) International Patent Classification (IPC):
*F16L 11/12* $^{(2006.01)}$ *F16L 11/08* $^{(2006.01)}$
*B32B 1/08* $^{(2006.01)}$ *B32B 7/022* $^{(2019.01)}$
*B32B 7/12* $^{(2006.01)}$ *B32B 27/08* $^{(2006.01)}$
*B32B 27/30* $^{(2006.01)}$ *B32B 27/32* $^{(2006.01)}$
*B32B 27/12* $^{(2006.01)}$ *B32B 15/085* $^{(2006.01)}$

(52) Cooperative Patent Classification (CPC):
B32B 1/08; B32B 7/022; B32B 7/12; B32B 15/085;
B32B 27/08; B32B 27/12; B32B 27/30;
B32B 27/32; F16L 11/08; F16L 11/12

(86) International application number:
PCT/KR2023/019159

(87) International publication number:
WO 2024/112161 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.11.2022 KR 20220159910

(71) Applicant: LS Cable & System Ltd.
Anyang-si, Gyeonggi-do 14119 (KR)

(72) Inventors:
• LEE, Jae Ik
Seoul 06372 (KR)

• WON, Yong Hee
Seoul 08090 (KR)
• KIM, Bong Suk
Suwon-si, Gyeonggi-do 16504 (KR)
• RYU, Ik Hyun
Anyang-si, Gyeonggi-do 13924 (KR)
• PARK, Young Hun
Incheon 21974 (KR)

(74) Representative: K&L Gates LLP
Karolinen Karree
Karlstraße 12
80333 München (DE)

(54) **HYDROGEN DELIVERY PIPE**

(57) The present invention relates to a hydrogen delivery pipe. Specifically, the present invention relates to a hydrogen delivery pipe that is capable of satisfying all properties required for a pipe for long-distance hydrogen delivery, such as hydrogen permeation-blocking properties, pressure resistance properties, and bendability properties, while reducing manufacturing costs.

【FIG. 1】

**Description**

[Technical Field]

The present invention relates to a hydrogen delivery pipe. Specifically, the present invention relates to a hydrogen delivery pipe that is capable of satisfying all properties required for a pipe for long-distance hydrogen delivery, such as hydrogen permeation-blocking properties, pressure resistance properties, and bendability properties, while reducing manufacturing costs.

[Background Art]

Recently, due to eco-friendly issues, the demand for the use of hydrogen energy instead of petroleum energy is increasing, and hydrogen charging stations or storages are being installed in remote areas or within cities for conveniently using such hydrogen, and a method for delivering hydrogen to such places is being required.

Conventionally, trailers are mostly used for long-distance transportation of hydrogen, so there is difficulty in stably supplying a large amount of hydrogen, and in some cases, a metal hydrogen delivery pipe is used based on a hydrogen production base, but there is a problem in that the installation difficulty is very high and, due to the characteristics of metal pipes, they cannot be wound around a bobbin, so only straight pipes with a short length of 10 m or less can be transported, and thus, they must be connected every 10 m on-site, resulting in high installation costs.

Meanwhile, carbon steel is generally used as a metal pipe material for delivering city gas or the like, but when delivering hydrogen, hydrogen embrittlement may occur, in which hydrogen molecules penetrate into the metal structure and gradually diffuse, thereby reducing the ductility or tensile strength of the metal.

In addition, in order to avoid or minimize hydrogen embrittlement when using a hydrogen delivery pipe, stainless steel, which is a material having excellent hydrogen permeation-blocking properties, may be considered, but this causes a problem in that the pipe material cost increases. Further, although pipes using materials such as polymer or aluminum are being developed, they do not satisfy all properties required for a pipe for long-distance hydrogen delivery, such as pressure resistance properties at a level of 100 bar, hydrogen permeation-blocking properties at the level of stainless steel, and minimum bend radius required for winding on a bobbin.

Accordingly, there is an urgent need for a hydrogen delivery pipe that may satisfy all properties required for a pipe for long-distance hydrogen delivery, such as hydrogen permeation-blocking properties, pressure resistance properties, and bendability properties, while reducing manufacturing costs.

[Disclosure]

[Technical Problem]

The present invention is directed to providing a hydrogen delivery pipe that is capable of satisfying all properties required for a pipe for long-distance hydrogen delivery, such as hydrogen permeation-blocking properties, pressure resistance properties, and bendability properties, while reducing manufacturing costs.

[Technical Solution]

To achieve the objects, the present invention is directed to providing a hydrogen delivery pipe, comprising: a liner formed in a hollow tube shape to provide a passage through which hydrogen gas moves, the liner being made of a material comprising a polymer resin; a hydrogen barrier layer provided on an outer side of the liner; a reinforcing layer provided on an outer side of the hydrogen barrier layer and comprising a fiber-reinforced polymer composite material; and a sheath layer provided on an outer side of the reinforcing layer, in which the hydrogen barrier layer may be made of a material having a hydrogen permeability coefficient of 5 $cm^3 \cdot cm/(m^2 \cdot 24\ hr \cdot atm)$ or less at 25°C and 1.5 bar.

Here, the hydrogen barrier layer may be made of ethylene vinyl alcohol (EVOH).

In addition, the hydrogen barrier layer may have a thickness of 0.1 to 2 mm.

Further, the hydrogen barrier layer may be made of aluminum or copper.

Here, the hydrogen barrier layer may have a thickness of 0.01 to 1 mm.

Further, the hydrogen barrier layer may be formed by transversely winding a foil or tape of aluminum or copper in an overlapped manner.

Here, a width of an overlapped portion may be 1 mm or more when the foil or tape is transversely wound in the overlapped manner.

Meanwhile, an adhesive layer may be provided between the hydrogen barrier layer and the reinforcing layer.

In addition, the hydrogen barrier layer may have a tensile strength of 10 MPa or more, and an elongation of 3% or more.

Here, a protective layer may be formed between the hydrogen barrier layer and the reinforcing layer, and an adhesive layer may be provided between the hydrogen barrier layer and the protective layer.

Meanwhile, the hydrogen barrier layer may have a tensile strength of 30 MPa or more, and an elongation of 3% or more.

In addition, the protective layer may be made of high-density polyethylene (HDPE).

Further, the adhesive layer may have a melting point of 150°C or less, and may be made of at least one material selected from the group consisting of maleic anhydride-grafted polyethylene (MAH-g-PE), maleic anhydride-grafted polypropylene (MAH-g-PP), ethylene acrylic acid (EAA), ethylene vinyl acetate (EVA), and epoxy.

Further, a flexural modulus according to ASTM D790 may be 9,000 MPa or less.

Meanwhile, the fiber-reinforced polymer composite material may comprise two or more types of reinforcing fibers selected from the group consisting of continuous fiber (CF), in which continuous reinforcing fibers are arranged in one direction; short fiber (SF), in which cut reinforcing fibers are randomly arranged; and woven fiber (WF), in which reinforcing fibers are arranged in a woven form.

In addition, an adhesion strength of an overlapped portion of the foil or tape of aluminum or copper may be 0.5 kgf or more.

Further, the hydrogen barrier layer may be made of copper, and the copper is oxygen-free copper.

[Advantageous Effects]

The hydrogen delivery pipe according to the present invention exhibits an excellent effect in that it may satisfy all properties required for a pipe for long-distance hydrogen delivery, such as hydrogen permeation-blocking properties, pressure resistance properties, and bendability properties, while reducing manufacturing costs, through a combination of a specific material and a laminated structure.

[Description of Drawings]

FIG. 1 illustrates one embodiment of a hydrogen delivery pipe according to the present invention.
FIG. 2 illustrates another embodiment of a hydrogen delivery pipe according to the present invention.

[Mode for Disclosure]

Hereinafter, exemplary embodiments of the present invention will be described in detail. However, the present invention is not limited to the exemplary embodiments to be described below and may be specified as other aspects. On the contrary, the embodiments introduced herein are provided to make the disclosed content thorough and complete, and sufficiently transfer the spirit of the present invention to those skilled in the art. Like reference numerals indicate like constituent elements throughout the specification.

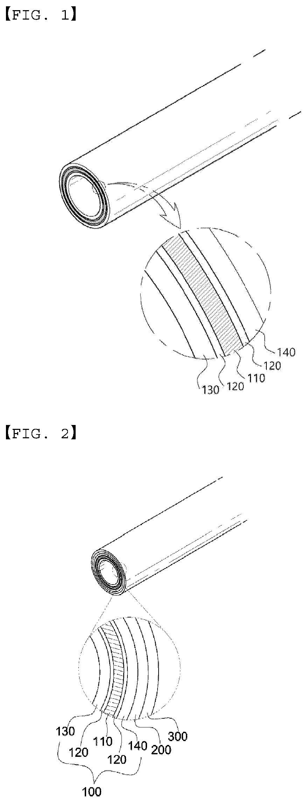

FIG. 1 illustrates one embodiment of a hydrogen delivery pipe according to the present invention.

As illustrated in FIG. 1, a hydrogen delivery pipe according to the present invention may comprise a liner 130 corresponding to a base layer of the pipe, a hydrogen barrier layer 110, a protective layer 140 laminated on an outer side of the hydrogen barrier layer 110, and an adhesive layer 120 provided between the hydrogen barrier layer 110 and the liner 130, and between the hydrogen barrier layer 110 and the protective layer 140. The protective layer 140 may be omitted depending on the material of the hydrogen barrier layer 110.

Specifically, the hydrogen barrier layer 110 may comprise a single layer or multiple layers made of a material having a hydrogen permeability coefficient of 5 $cm^3 \cdot cm/(m^2 \cdot 24\ hr \cdot atm)$ or less at 25°C and 1.5 bar, such as a polymer material such as ethylene vinyl alcohol (EVOH), or a metal material such as aluminum or copper.

Here, when all layers comprised in the hydrogen barrier layer 110 have a hydrogen permeability coefficient exceeding 5 $cm^3 \cdot cm/(m^2 \cdot 24\ hr \cdot atm)$, the hydrogen barrier performance for long-distance hydrogen delivery may not be satisfied, or in order to satisfy the hydrogen barrier performance, the thickness of the pipe needs to be increased, thereby causing a problem of degraded flexibility and bendability properties of the pipe.

In addition, the hydrogen barrier layer 110 may have different thicknesses and numbers of laminated layers depending on the material constituting the layer, and the thickness may be, for example, from 0.01 to 2 mm, preferably 0.01 to 1 mm when composed of a metal material, and 0.1 to 2 mm when composed of a polymer resin material.

Further, when the hydrogen barrier layer 110 is composed of a metal material such as aluminum or copper, the metal material may be applied in the form of a foil or tape.

3

Meanwhile, in case of a metal foil or tape, it may be wound transversely so that the overlapped portion has a width of 1 mm or more, preferably 10 mm or more, and when the width of the overlapped portion is less than 1 mm, it may be difficult to secure sufficient adhesion between the foil or tape, thereby degrading the hydrogen barrier performance. On the other hand, as the width of the overlapped portion increases, the adhesion and hydrogen barrier performance between the foil or tape become excellent, but there arises a problem in that manufacturing costs increase due to excessive use of material. Specifically, the adhesion strength of the overlapped portion in the metal foil or tape is preferably 0.5 kgf or more, more preferably 1 kgf or more, and when the adhesion strength is less than 0.5 kgf, there may be a problem in which the overlapped portion detaches during bending.

In addition, when the hydrogen barrier layer 110 is made of a polymer resin such as EVOH, a tensile strength of 10 MPa or more is suitable, and when made of a metal material, a tensile strength of 30 MPa or more is suitable. Further, the elongation of the hydrogen barrier layer 110 is preferably 3% or more. Here, when the elongation of the hydrogen barrier layer 110 made of a metal material is less than 3%, cracks or rupture may occur due to extension caused by bending.

In addition, in case that the hydrogen barrier layer 110 is made of copper, when it contains a high amount of oxygen, it may react with hydrogen and become vulnerable to hydrogen embrittlement, therefore, it is preferable to use oxygen-free copper for the copper material.

The above hydrogen permeability coefficient may be calculated using the data measured in accordance with ISO 2782-1 and ISO 15105-1, based on the following Equations 1 and 2.

$$[\text{Equation 1}]$$

$$P = GTR \times d$$

$$[\text{Equation 2}]$$

$$GTR = \frac{V_c}{R \times T \times P_u \times A} \times \frac{dP}{dt}$$

In Equations 1 and 2, P refers to the hydrogen permeability coefficient, GTR refers to the gas transmission rate, d refers to the thickness of the sample, $V_c$ refers to the volume on the low-pressure side of the sample, R refers to the gas constant, T refers to the experimental temperature, $P_u$ refers to the pressure difference between the high-pressure side and the low-pressure side, A refers to the gas permeation area, and dP/dt refers to the pressure change on the low-pressure side of the sample per unit time.

The liner 130 may be formed in a hollow tube shape so as to serve as a base layer of the pipe, being in contact with hydrogen gas and providing a passage through which the hydrogen gas moves, and may be made of a material comprising at least one polymer resin selected from high-density polyethylene (HDPE), linear low-density polyethylene (LLDPE), low-density polyethylene (LDPE), medium-density polyethylene (MDPE), ultra-high molecular weight polyethylene (UHMWPE), polypropylene (PP), ethylene propylene diene monomer (EPDM), styrene butadiene rubber (SBR), nitrile butadiene rubber (NBR), polytetrafluoroethylene (PTFE), polyvinylidene fluoride (PVDF), fluorocarbon rubber (FKM), silicone rubber, polyamide (PAll, PA12, PA6, PA66), polyphenylene sulfide (PPS), polyketone, and polyether ether ketone (PEEK).

The protective layer 140 may protect the hydrogen barrier layer 110, and particularly, when EVOH is used as the hydrogen barrier layer 110, it may serve to protect the EVOH, which is vulnerable to moisture, from moisture, and may perform a function of improving the flexibility and bendability properties of the hydrogen delivery pipe. For example, the protective layer 140 may be made of a polymer material such as high-density polyethylene (HDPE), linear low-density polyethylene (LLDPE), low-density polyethylene (LDPE), medium-density polyethylene (MDPE), ultra-high molecular weight polyethylene (UHMWPE), polypropylene (PP), ethylene propylene diene monomer (EPDM), styrene butadiene rubber (SBR), chloroprene rubber (CR), nitrile butadiene rubber (NBR), polytetrafluoroethylene (PTFE), polyvinylidene fluoride (PVDF), fluorocarbon rubber (FKM), silicone rubber, polyvinyl chloride (PVC), or polyamide (PAll, PA12), and preferably, since the hydrogen barrier layer 110 may be highly vulnerable to moisture, when it is ethylene vinyl alcohol (EVOH), the protective layer 140 may be made of high-density polyethylene (HDPE).

The adhesive layer 120 may perform a function of bonding the hydrogen barrier layer 110 to the liner 130, and the hydrogen barrier layer 110 to the protective layer 140 or the reinforcing layer 200, and may comprise a material having a melting point of 150°C or less, preferably 120°C or less, such as maleic anhydride-grafted polyethylene (MAH-g-PE), maleic anhydride-grafted polypropylene (MAH-g-PP), ethylene acrylic acid (EAA), ethylene vinyl acetate (EVA), or epoxy.

Here, when the melting point of the material of the adhesive layer 120 exceeds 150°C, when manufacturing by five-layer co-extrusion from the hydrogen barrier layer 110 to the protective layer 140, an additional process of separately melting and fusing the adhesive layer 120 may be required, thereby significantly lowering productivity.

By the adhesive layer 120, the adhesion strength between the hydrogen barrier layer 110 and the protective layer 140, or between the hydrogen barrier layer 110 and the liner 130, may be 1 kgf or more, preferably 2 kgf or more. The adhesion strength may be evaluated by fabricating respective 1 mm-thick sheet specimens of the hydrogen barrier layer 110, the liner 130, and the protective layer 140, producing a sample by press molding under conditions of 150 kgf/cm$^2$ using the adhesive layer 120 as a medium, and measuring the force required to separate only the protective layer 140 or the liner 130 from the hydrogen barrier layer 110 while pulling at a tensile speed of 100 mm/min using a tensile tester.

The hydrogen delivery pipe according to the present invention may have a flexural modulus of 9,000 MPa or less, preferably 6,000 MPa or less, and more preferably 5,000 MPa or less, in accordance with ASTM D790. Here, when the flexural modulus exceeds 9,000 MPa, it may be difficult to secure the maximum curvature radius for winding on a bobbin, and due to low flexibility, workability may be degraded.

FIG. 2 illustrates another embodiment of a hydrogen delivery pipe according to the present invention.

As illustrated in FIG. 2, the hydrogen delivery pipe according to the present invention may further comprise a reinforcing layer 200 on an outer surface of a pipe body 100. The reinforcing layer 200 may be additionally applied to withstand pressure generated by compressed hydrogen delivered inside the pipe body 100, and may be formed of a fiber-reinforced polymer composite material in which reinforcing fibers are dispersed in a polymer resin.

The polymer resin may comprise high-density polyethylene (HDPE), low-density polyethylene (LDPE), linear low-density polyethylene (LLDPE), medium-density polyethylene (MDPE), ultra-high molecular weight polyethylene (UHMWPE), polypropylene (PP), polyamide (PAll, PA12, PA6, PA66), thermoplastic polyester elastomer (TPEE), epoxy, polyester, or the like. In addition, the reinforcing fibers may comprise glass fiber, carbon fiber, aramid fiber, basalt fiber, or the like. The melting point difference between the fiber-reinforced polymer composite material, which is the material of the reinforcing layer 200, and the material of the pipe body 100, may be 150°C or less, and preferably 100°C or less. When the melting point difference exceeds 150°C, in the process of fusion-bonding the reinforcing layer 200 to the outer surface of the pipe body 100, the pipe body 100 may melt and flow due to the melting point difference between materials, which may result in a problem in that the shape of the pipe cannot be maintained.

In particular, the reinforcing fiber orientation and reinforcing fiber arrangement configuration of the fiber-reinforced polymer composite material forming the reinforcing layer 200 are extremely important factors that determine the pressure resistance properties, and the fiber-reinforced polymer composite material may comprise a polymer composite material in which at least two types among continuous fiber (CF), in which continuous reinforcing fibers are arranged in one direction, short fiber (SF), in which cut fibers are randomly arranged, and woven fiber (WF), in which reinforcing fibers are arranged in a woven form, are impregnated into a polymer resin. Here, the woven fiber (WF) may be defined as woven fiber (WF) as long as the reinforcing fibers intersect each other, regardless of the angle formed between the reinforcing fibers.

Among the fiber-reinforced polymer composite materials, the strength is superior in the order of the woven fiber (WF) polymer composite material comprising the woven fiber (WF), the continuous fiber (CF) polymer composite material comprising the continuous fiber (CF), and the short fiber (SF) polymer composite material comprising the short fiber (SF), and the flexibility is superior in the order of the short fiber (SF) polymer composite material, the continuous fiber (CF) polymer composite material, and the woven fiber (WF) polymer composite material. Accordingly, when only a short fiber (SF) polymer composite material layer is used as the reinforcing layer, flexibility is excellent but strength may be low, and when only a woven fiber (WF) polymer composite material layer is used as the reinforcing layer, strength is excellent but flexibility may be insufficient. Therefore, in an embodiment of the present invention, by laminating two or more combinations of a continuous fiber (CF) polymer composite material layer, a short fiber (SF) polymer composite material layer, and a woven fiber (WF) polymer composite material layer, and using the laminated structure as the reinforcing layer, both strength and flexibility may be satisfied.

Meanwhile, the reinforcing layer 200 may be formed by winding a fiber-reinforced polymer composite material in the form of a tape or sheet on an outer surface of the pipe body 100 and then fusion-bonding, or by fusion-bonding simultaneously with the winding, or by prearranging reinforcing fibers on the outer surface of the pipe body 100 and extruding a polymer resin thereon. Here, the thickness of one layer of the reinforcing layer, which is formed by tape, sheet, or extrusion, may be about 0.1 to 2.0 mm.

Further, according to an embodiment of the present invention, in order to satisfy the pressure resistance properties of the hydrogen delivery pipe, it is preferable to use a combination of a continuous fiber (CF) polymer composite material comprising continuous fiber (CF) and a short fiber (SF) polymer composite material comprising short fiber (SF), or a combination of a woven fiber (WF) polymer composite material comprising woven fiber (WF) and a short fiber (SF) polymer composite material. The reinforcing layer may be formed by configuring different layers with the two composite materials, or by winding and laminating at least one tape or sheet in which a short fiber (SF) polymer composite base layer and a continuous fiber (CF) or woven fiber (WF) polymer composite coating layer are comprised, and then pressing them, or by placing continuous fiber (CF) or woven fiber (WF) on the surface of the pipe body 100 and then laminating one or more extruded layers of short fiber (SF) polymer composite material thereon.

In the reinforcing layer 200, the tensile strength of the continuous fiber (CF) polymer composite material layer is preferably 100 MPa or more, more preferably 200 MPa or more, and the elongation is preferably 0.5% or more, more preferably 1.0% or more. In addition, the tensile strength of the short fiber (SF) polymer composite material layer is 20 MPa or more, preferably 30 MPa or more, and the tensile strength of the woven fiber (WF) polymer composite material layer is 200 MPa or more, preferably 300 MPa or more. In order for the reinforcing layer 200 to secure a pressure resistance level of 100 bar, the content of reinforcing fibers in the reinforcing layer 200, based on the total weight of the reinforcing layer, is 10 wt% or more, preferably 20 wt% or more.

When the content of the reinforcing fibers is less than 10 wt%, the thickness of the reinforcing layer needs to be increased to satisfy the pressure resistance properties of 100 bar, which may degrade the flexibility of the pipe and require an increase in the size of a connector for connecting the pipe, thereby causing a problem of degraded workability.

Specifically, based on the total content of reinforcing fibers, the content of the continuous fiber (CF) may be 0 to 80 wt%, the content of the short fiber (SF) may be 0 to 60 wt%, and the content of the woven fiber (WF) may be 0 to 80 wt%.

Meanwhile, on the outer surface of the reinforcing layer 200, a sheath layer 300 may be additionally provided to protect the hydrogen delivery pipe according to the present invention from external impacts or pressure, and the sheath layer may be formed of a material having a melting point of 50°C or more, preferably 70°C or more, such as high-density polyethylene (HDPE), medium-density polyethylene (MDPE), linear low-density polyethylene (LLDPE), low-density polyethylene (LDPE), ethylene vinyl acetate (EVA), ethylene ethyl acrylate (EEA), polyolefin elastomer (POE), or thermoplastic polyethylene (TPE).

Here, when the melting point of the sheath layer 300 is less than 50°C, heat resistance is low, which may cause a problem in that the sheath layer 300 deteriorates or fails to maintain its shape during long-term use. In addition, the brittle temperature of the sheath layer 300 may be -5°C or less, and preferably -10°C or less, thereby providing excellent cold resistance. Here, when the brittle temperature of the sheath layer 300 exceeds -5°C, cracks may occur in the sheath layer 300 under cold conditions, such as in winter.

The brittle temperature may be measured according to ASTM D746, based on the following Equation 3.

[Equation 3]

$$T_b = T_h + \triangle T[(\frac{S}{100})-(\frac{1}{2})]$$

In Equation 3, $T_b$ refers to the brittle temperature, $T_h$ refers to the highest temperature at which fracture of the specimen occurs during the cold resistance evaluation test, $\triangle T$ refers to the temperature change amount during the cold resistance evaluation test, and S refers to the sum of the percentages of specimens fractured at each test temperature.

Therefore, the hydrogen delivery pipe according to the present invention exhibits an excellent effect in that it may satisfy all properties required for a pipe for long-distance hydrogen delivery, such as hydrogen permeation-blocking properties, pressure resistance properties, and bendability properties, while reducing manufacturing costs, through a combination of the specific material and a laminated structure.

[Examples]

1. Manufacturing Example

Hydrogen delivery pipe samples were manufactured using the configurations shown in Tables 1 and 2. In particular, the hydrogen delivery pipes of Examples 4 to 7 and Comparative Examples 3 and 4 according to Table 2 are each formed by forming a reinforcing layer on the outer surface of the pipe body of Example 1.

[Table 1]

|  | Example 1 | Example 2 | Example 3 | Comparat ive Example 1 | Comparat ive Example 2 |
|---|---|---|---|---|---|
| Hydrogen barrier layer | Material a | Material b | Material c | Material d |  |
| Upper adhesive layer | Material e | Material e | Material e | Material e | Material e |
| Lower adhesive layer | Material e | Material e | Material e | Material e |  |
| Upper protectiv e layer | Material f |  |  | Material f | Material f |

(continued)

|  | Example 1 | Example 2 | Example 3 | Comparat ive Example 1 | Comparat ive Example 2 |
|---|---|---|---|---|---|
| Liner | Material f | Material f | Material f | Material f | Material f |

- Material a: Ethylene vinyl alcohol (EVOH) (hydrogen permeability coefficient: less than 1 $cm^3 \cdot cm/(m^2 \cdot 24\ hr \cdot atm)$)
- Material b: Aluminum foil (hydrogen permeability coefficient: less than 1 $cm^3 \cdot cm/(m^2 \cdot 24\ hr \cdot atm)$)
- Material c: Aluminum tape (hydrogen permeability coefficient: less than 1 $cm^3 \cdot cm/(m^2 \cdot 24\ hr \cdot atm)$)
- Material d: Polyamide (PA11) (hydrogen permeability coefficient: 7 $cm^3 \cdot cm/(m^2 \cdot 24\ hr \cdot atm)$)
- Material e: Maleic anhydride-grafted high-density polyethylene (MAH-g-HDPE) (hydrogen permeability coefficient: 45 $cm^3 \cdot cm/(m^2 \cdot 24\ hr \cdot atm)$)
- Material f: High-density polyethylene (HDPE) (hydrogen permeability coefficient: 15 $cm^3 \cdot cm/(m^2 \cdot 24\ hr \cdot atm)$)

[Table 2]

|  | Example 4 | Example 5 | Example 6 | Example 7 | Example 8 | Comparative Example 3 | Comparative Example 4 |
|---|---|---|---|---|---|---|---|
| Reinforcing Layer Configuration | CF layer + SF layer altern ating lamina tion | CF layer + WF layer altern ating lamina tion | SF (base) + CF (coating) layer | Extrusion of SF layer over CF | Extrusion of SF layer over WF | SF layer | WF layer |
| Number of reinfor cing layers | 8 layers | 6 layers | 6 layers | 6 layers | 6 layers | 8 layers | 8 layers |
| Method for forming reinforcing layer | Lamina tion and high-temper ature fusion bonding | Lamina tion and high-temper ature fusion bonding | Laminati on and high-temperat ure fusion bonding | Extrusion of polymer compo site layer (SF layer) after arranging reinforcing fiber (CF) only | Extrusion of polymer compo site layer (SF layer) after arranging reinforcing fiber (WF) only | Lamin ation and high-tempe ratur e fusio n bondi ng | Lamin ation and high-tempe ratur e fusio n bondi ng |

- Lamination is performed using a taping machine, and the tape width is from 20 to 300 mm
- High-temperature fusion bonding is carried out by passing the pipe sample with the proper number of laminated layers through a high-temperature oven open at both ends to melt and fuse the reinforcing layers, or by fusing each laminated sheet one by one using a laser, hot air blower, or Xenon lamp
- Extrusion is carried out by winding the reinforcing fiber on the pipe body, and extruding the polymer composite material over the reinforcing fiber

2. Property Evaluation

1) Hydrogen Leakage Evaluation

In accordance with KGS AC118 2020, clean and dry hydrogen gas was injected into each hydrogen delivery pipe sample of Examples 1 to 3 and Comparative Examples 1 and 2, and the gas was pressurized stepwise up to the design pressure, increasing by 1/10 of the design pressure at each stage. After the permeation amount per unit time became stable, the amount of hydrogen leakage was measured for at least 500 hours using a mass spectrometer, and the measurement results are shown in Table 3 below. A hydrogen exposure amount of 0.005 kg/hr·kg or less is considered satisfactory, and a value exceeding 0.005 kg/hr·kg is considered unsatisfactory, and the evaluation results are shown in Table 3 below.

[Table 3]

|  | Example 1 | Example 2 | Example 3 | Comparat ive Example 1 | Comparat ive Example 2 |
|---|---|---|---|---|---|
| Hydrogen Leakage Amount | Satisfac tory | Satisfac tory | Satisfac tory | Unsatisf actory | Unsatisf actory |

As shown in Table 3, the hydrogen delivery pipes of Examples 1 to 3, which comprise a hydrogen barrier layer having a hydrogen permeability coefficient of less than 5 $cm^3 \cdot cm/(m^2 \cdot 24\ hr \cdot atm)$, exhibited excellent hydrogen leakage amounts of 0.005 kg/hr·kg or less, whereas the hydrogen delivery pipes of Comparative Examples 1 and 2, which either do not comprise a hydrogen barrier layer or comprise a hydrogen barrier layer having a hydrogen permeability coefficient of more than 5 $cm^3 \cdot cm/(m^2 \cdot 24\ hr \cdot atm)$, were found to be defective with hydrogen leakage amounts of more than 0.005 kg/hr·kg.

2) Pressure Resistance Evaluation

In accordance with KGS FS112, for each of the hydrogen delivery pipe samples of Examples 4 to 7 and Comparative Examples 3 and 4, the pressure was increased using air to 50% of the working pressure, and then increased stepwise by 10% of the working pressure until the internal pressure test level was reached. When there is no abnormality such as swelling or leakage occurred in the pipe sample at internal pressure test level and no abnormality such as swelling or leakage occurred when the pressure was reduced to the working pressure, the sample was considered acceptable.

3) Bendability Properties Evaluation

In accordance with API 15S, the pass/fail status was determined by performing 10 complete reverse cycles at the minimum storage bend radius, followed by a 1,000-hour internal pressure test. Here, the internal pressure test was conducted in the same manner as the pressure resistance evaluation method described above.
The evaluation results for pressure resistance and bendability properties are shown in Table 4 below.

[Table 4]

|  | Examp le 4 | Examp le 5 | Examp le 6 | Examp le 7 | Examp le 8 | Compa rativ e Examp le 3 | Compa rativ e Examp le 4 |
|---|---|---|---|---|---|---|---|
| Pressu re resist ance | Pass | Pass | Pass | Pass | Pass | Fail | Pass |
| Bendab ility proper ties | Pass | Pass | Pass | Pass | Pass | Pass | Fail |

As shown in Table 4, the pipe samples of Comparative Examples 3 and 4, in which the reinforcing layer is provided solely with a short fiber (SF) polymer composite material layer or solely with a woven fiber (WF) polymer composite material layer, were found to have defective pressure resistance or bendability properties.
While the present specification has been described above with reference to the exemplary embodiments of the present invention, it may be understood by those skilled in the art that the present invention may be variously modified and changed without departing from the spirit and scope of the present invention disclosed in the claims. Therefore, it should be understood that any modified embodiment that essentially comprises the constituent elements of the claims of the present invention is comprised in the technical scope of the present invention.

**Claims**

1. A hydrogen delivery pipe, comprising:

    a liner formed in a hollow tube shape to provide a passage through which hydrogen gas moves, the liner being made of a material comprising a polymer resin;
    a hydrogen barrier layer provided on an outer side of the liner;
    a reinforcing layer provided on an outer side of the hydrogen barrier layer and comprising a fiber-reinforced polymer composite material; and
    a sheath layer provided on an outer side of the reinforcing layer,
    wherein the hydrogen barrier layer is made of a material having a hydrogen permeability coefficient of 5

$cm^3 \cdot cm/(m^2 \cdot 24\ hr \cdot atm)$ or less at 25°C and 1.5 bar.

2. The hydrogen delivery pipe of claim 1, wherein the hydrogen barrier layer is made of ethylene vinyl alcohol (EVOH).

3. The hydrogen delivery pipe of claim 2, wherein the hydrogen barrier layer has a thickness of 0.1 to 2 mm.

4. The hydrogen delivery pipe of claim 1, wherein the hydrogen barrier layer is made of aluminum or copper.

5. The hydrogen delivery pipe of claim 4, wherein the hydrogen barrier layer has a thickness of 0.01 to 1 mm.

6. The hydrogen delivery pipe of claim 4, wherein the hydrogen barrier layer is formed by transversely winding a foil or tape of aluminum or copper in an overlapped manner.

7. The hydrogen delivery pipe of claim 6, wherein a width of an overlapped portion is 1 mm or more when the foil or tape is transversely wound in the overlapped manner.

8. The hydrogen delivery pipe of any one of claims 1 to 7, wherein an adhesive layer is provided between the hydrogen barrier layer and the reinforcing layer.

9. The hydrogen delivery pipe of claim 2, wherein the hydrogen barrier layer has a tensile strength of 10 MPa or more, and an elongation of 3% or more.

10. The hydrogen delivery pipe of claim 9, wherein a protective layer is formed between the hydrogen barrier layer and the reinforcing layer, and an adhesive layer is provided between the hydrogen barrier layer and the protective layer.

11. The hydrogen delivery pipe of claim 4, wherein the hydrogen barrier layer has a tensile strength of 30 MPa or more, and an elongation of 3% or more.

12. The hydrogen delivery pipe of claim 10, wherein the protective layer is made of high-density polyethylene (HDPE).

13. The hydrogen delivery pipe of claim 8, wherein the adhesive layer has a melting point of 150°C or less, and is made of at least one material selected from the group consisting of maleic anhydride-grafted polyethylene (MAH-g-PE), maleic anhydride-grafted polypropylene (MAH-g-PP), ethylene acrylic acid (EAA), ethylene vinyl acetate (EVA), and epoxy.

14. The hydrogen delivery pipe of any one of claims 1 to 7, wherein a flexural modulus according to ASTM D790 is 9,000 MPa or less.

15. The hydrogen delivery pipe of any one of claims 1 to 7, wherein the fiber-reinforced polymer composite material comprises two or more types of reinforcing fibers selected from the group consisting of continuous fiber (CF), in which continuous reinforcing fibers are arranged in one direction; short fiber (SF), in which cut reinforcing fibers are randomly arranged; and woven fiber (WF), in which reinforcing fibers are arranged in a woven form.

16. The hydrogen delivery pipe of claim 6, wherein an adhesion strength of an overlapped portion of the foil or tape of aluminum or copper is 0.5 kgf or more.

17. The hydrogen delivery pipe of claim 4, wherein the hydrogen barrier layer is made of copper, and the copper is oxygen-free copper.

【FIG. 1】

【FIG. 2】

## INTERNATIONAL SEARCH REPORT

| International application No. |
| --- |
| **PCT/KR2023/019159** |

| A. | CLASSIFICATION OF SUBJECT MATTER |
| --- | --- |

**F16L 11/12**(2006.01)i; **F16L 11/08**(2006.01)i; **B32B 1/08**(2006.01)i; **B32B 7/022**(2019.01)i; **B32B 7/12**(2006.01)i; **B32B 27/08**(2006.01)i; **B32B 27/30**(2006.01)i; **B32B 27/32**(2006.01)i; **B32B 27/12**(2006.01)i; **B32B 15/085**(2006.01)i

According to International Patent Classification (IPC) or to both national classification and IPC

| B. | FIELDS SEARCHED |
| --- | --- |

Minimum documentation searched (classification system followed by classification symbols)

F16L 11/12(2006.01); B32B 1/08(2006.01); B32B 7/04(2006.01); C08K 3/04(2006.01); F16L 11/08(2006.01); F16L 9/133(2006.01); F17C 1/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 수소 이송용 배관(piping for hydrogen transport), 튜브(tube), 라이너(liner), 차단층(blocking layer), 보강층(reinforcing layer), 시스층(sheath layer)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2004-216665 A (BRIDGESTONE CORP. et al.) 05 August 2004 (2004-08-05) See paragraphs [0010]-[0040], claims 1 and 7, table 1 and figures 3-4. | 1-3,8-10,12-15 |
| Y | | 4-7,11,16-17 |
| Y | US 2004-0182463 A1 (BESSETTE et al.) 23 September 2004 (2004-09-23) See paragraphs [0031]-[0058] and figure 1. | 4-7,11,16-17 |
| A | KR 10-2001-0087628 A (PLUMB FAST CO., LTD.) 21 September 2001 (2001-09-21) See paragraphs [0009]-[0023] and figures 1-2. | 1-17 |
| A | JP 2020-016323 A (HITACHI-GE NUCLEAR ENERGY LTD.) 30 January 2020 (2020-01-30) See claim 1 and figure 2. | 1-17 |
| A | KR 10-2022-0118320 A (HIZEAERO CO., LTD.) 25 August 2022 (2022-08-25) See claims 1-2 and figure 1. | 1-17 |

☐ Further documents are listed in the continuation of Box C.    ☑ See patent family annex.

| | |
| --- | --- |
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **28 February 2024** | **28 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

| | | | | |
|---|---|---|---|---|
| International application No. | | | | |
| **PCT/KR2023/019159** | | | | |

| Patent document cited in search report | | | Publication date (day/month/year) | Patent family member(s) | | | Publication date (day/month/year) |
|---|---|---|---|---|---|---|---|
| JP | 2004-216665 | A | 05 August 2004 | JP | 4537006 | B2 | 01 September 2010 |
| US | 2004-0182463 | A1 | 23 September 2004 | US | 7055553 | B2 | 06 June 2006 |
| | | | | WO | 2004-076904 | A1 | 10 September 2004 |
| KR | 10-2001-0087628 | A | 21 September 2001 | KR | 20-0197240 | Y1 | 15 September 2000 |
| JP | 2020-016323 | A | 30 January 2020 | CN | 110774701 | A | 11 February 2020 |
| | | | | CN | 110774701 | B | 08 October 2021 |
| | | | | JP | 6990629 | B2 | 12 January 2022 |
| | | | | KR | 10-2020-0013223 | A | 06 February 2020 |
| | | | | KR | 10-2243229 | B1 | 23 April 2021 |
| KR | 10-2022-0118320 | A | 25 August 2022 | | None | | |

Form PCT/ISA/210 (patent family annex) (July 2022)